# EUROPEAN PATENT APPLICATION

(11) **EP 1 353 170 A2**
(43) Date of publication of application: **15.10.2003**
(21) Application number: 03447071.6
(22) Date of filing: 28.03.2003
(51) Int. Cl.: G01N 27/414

(54) **Field effect transistor for sensing applications**

(30) Priority: 28.03.2002 US 369051 P; 29.03.2002 EP 02447050
(71) Applicant: Interuniversitair Micro-Elektronica Centrum (IMEC), 3001 Heverlee (BE)
(72) Inventor: De Keersmaecker, Koen, 3020 Herent (BE); Borghs, Gustaaf, 3010 Leuven (BE)
(74) Representative: Van Malderen, Joelle

(57) **Abstract**

The present invention is related to a sensing device comprising:
- a drain electrode, a source electrode, a gate electrode, a semi-conducting channel layer having a first side and a second opposite side,
- an organic sensing layer having at least one functional group which has the function which is able to bind the underlying layer to said organic sensing layer (1) and at least another functional group which has a sensing function; wherein
- said source electrode, said drain electrode and said gate electrode are placed on the first side of said semi-conducting channel layer, while said organic sensing layer is placed on the second side of the semi-conducting channel layer,
- said semi-conducting channel layer is operatively associated with said organic sensing layer, and
- said semi-conducting channel layer has a thickness below 5000 nm.

## Description

### Field of the invention

The present invention relates to the field of semiconductor devices and more particularly to organic sensors such as molecularly controlled dual gated field effect transistors used for the direct sensing upon double gate transistors.

### Background of the invention and state of the art

A sensor is a device used to detect ions, molecules or energies of any kind. Its sensitivity and its selectivity as well as the lifetime determine the quality of a sensor.

The combination of semiconductors with organic molecules is an attractive option for sensors. This combination offers the advantage to associate sensitivity and selectivity through a molecular detection layer.

A mere change in electron density or electronegativity of the molecular surface-adsorbate complex, upon physical or chemical perturbation, results in a direct and fast change of electro-optical properties of the semiconductor sensor. In consideration to their direct and fast transduction principle, hybrid organic/inorganic sensors allow real-time monitoring of dynamic processes with unparalleled sensitivity.

The realisation of hybrid organic/inorganic III-V semiconductors for sensor applications requires that key issues such as selectivity, sensitivity, kinetics, long term stability and reproducibility, are addressed by the appropriate surface chemistry.

Sensors based on field effect transistors exhibit a third electrode (gate) located between the two main current-carrying contacts (source and drain). The gate is used to control the current through the device. Document US-A-4777019 discloses such a device where the sensor effect is based on changing the current passing through the device due to the absorption of molecules on the gate. ISFET sensors are also disclosed in DE-A-4316086 and WO94/22006 A1.

Document US-A-3831432 describes an ungated field-effect transistor (FET) using an adsorption layer between the source and drain with two spaced apart regions of opposite conductivity type. These ungated devices are oversensitive to electrical interferences, which leads to unwanted high noise levels compared to gated devices.

ISFETs are field effect devices in which an adsorbed molecule such as an ion changes the current between source and drain. ISFETs can also be used for sensing "neutral" molecules upon the use of a catalytic intermediate layer that transforms the analyte into a loaded species that can be adsorbed onto the gate area/dielectric and modulate the current through its field effect.

Document WO 98/19151 discloses a hybrid organic/inorganic transistor as a sensor for chemicals and light comprising a semiconductor layer, an insulation layer and a thin active layer of multifunctional organic sensing molecules directly chemisorbed between the source and drain electrical contacts. This configuration presents the disadvantage of a static use requiring an adaptation of the thickness for each type of detection. For such a sensor the active detection area is reduced in practice and the electronic part is easier exposed to the analyte substract. As far as micro-electronics and liquids are incompatible, the micro-electronics have to be insulated as much as possible from the liquid environment to avoid corrosion problems.

Document [Perkins2000] describes a depletion mode transducer based on silicon ISFET technology with an organic sensing layer adsorbed on the gate area. This device resembles standard ISFETs in that it is a gateless three-electrode field effect transistor.

However, being a depletion mode device, it lacks the necessity of actively biasing the transistor into conduction. This is achieved by implanting a suitable dose of load carriers. Again, this is a static way of biasing a transistor which has to be adapted during its production according to the type of organic sensing layer and which is simultaneously done at wafer level for all sensor elements. As for standard ISFETs, the device is sensitive to loads that are adsorbed on the gate area. Furthermore, when used as described in [Perkins2000], the device becomes sensitive to neutral molecules since their adsorption on the organic sensing layer changes the capacitive coupling of the voltage of the electrolyte solution to the channel, resulting in a mere linear change of the source-drain current. However, this set-up requires an electrolyte solution to be present on the top of the gate area. The consequence is a lower sensitivity due to the inherent native oxide of silicon which implies tight specifications for packaging due to current carrying electrodes at the solution side of the device.

The documents DE-A-4308081, WO-A-97/39145 and EP-A-0751392 disclose a semi-conducting element of relatively high thickness measuring the transmission of electrical signals through a semi-conducting channel layer of also relatively high thickness. Therefore the sensitivity of the sensor for the detection of low concentrations is at least reduced or even impossible. Furthermore, insulation layers are present to cushion the signal input.

### Aims of the invention

The present invention aims to provide a device and a method of manufacturing such a device which do not have the drawbacks of the state of the art.

In particular, the present invention aims to provide a sensor based, on a direct sensing mechanism with a high sensitivity, a large detection area without passivating native oxide layer and with direct contact between the sensing gate layer and the semi-conducting channel layer and a method for the production of said device.

### Summary of the invention

As a first object, the present invention relates to a sensing device comprising:
- a drain electrode, a source electrode, a gate electrode, a semi-conducting channel layer having a first side and a second opposite side,
- an organic sensing layer having at least one functional group which is able to bind the underlying layer to said organic sensing layer and at least another functional group which has a sensing function; wherein
- said source electrode, said drain electrode and said gate electrode are placed on the first side of said semi-conducting channel layer, while said organic sensing layer is placed on the second side of the semi-conducting channel layer,
- said semi-conducting channel layer is operatively associated with said organic sensing layer, and
- said semi-conducting channel layer has a thickness below 5000 nm.

Preferably, it further comprises an intermediate layer between the sensing layer and the semi-conducting channel layer.

Preferably, the intermediate layer between the sensing layer and the semi-conducting channel layer has a thickness between 10 and 500 nm.

Preferably, the intermediate layer between the organic sensing layer and the semi-conducting channel layer has a thickness between 50 and 200 nm.

Preferably, said intermediate layer is a crystalline layer.

Preferably, the organic sensing layer comprises a self-assembling monolayer.

Preferably, the material of the intermediate layer is selected from the group consisting of Ga, As, N, P, In, Al or compounds thereof.

Preferably, said organic sensing layer is able to induce a change in its physical or chemical properties due to a non-electrical signal in the workfunction and/or the surface potential of the underlying layer of said sensing layer.

Preferably, said organic sensing layer induces a change in the dipole moment and/or in the surface recombination velocity of the semi-conducting channel layer by the introduction and/or the redistribution of charges in said organic sensing layer.

Preferably, the material of the semi-conducting channel layer comprises a material selected from the group consisting of Silicon, Germanium, Gallium, Arsenic, Indium, Aluminium, Phosphor or compounds thereof.

Preferably, said organic sensing layer has a thickness below 100 nm.

As a second object, the present invention is related to a method for the production of a sensing device as claimed in any one of the previous claims, said device comprising :
- an organic sensing layer,
- a semi-conducting channel layer,
- a drain electrode,
- a source electrode,
- a gate electrode,
wherein said source electrode, said drain electrode and said gate electrode are built on the first side of said semi-conducting channel layer while said organic sensing layer is built on the opposite side of said semi-conducting channel layer.

Preferably, organic sensing layer is made by a self-assembling monolayer or a mixed self-assembling monolayer with functionalized molecules.

Preferably, an additional intermediate layer is introduced between the organic sensing layer and the semi-conducting channel layer.

Preferably, the semi-conducting channel layer is realised in a thickness between 10 and 5000 nm.

Such device can be used for the detection of molecules or of energy.

### Short description of the drawings

Fig. 1 represents a dual gate transistor showing the first embodiment of the present invention.

Fig. 2 represents a dual gate transistor showing the second embodiment of the present invention.

### Detailed description of the invention

As described in the drawings, the present invention discloses a sensing device comprising an organic sensing layer 1 having at least one functional group that is able to bind or to connect the underlying layer which is a semiconductor layer 3 or an intermediate layer 2 placed between said semi-conducting layer and said sensing layer, and at least another functional group which has a sensing function.

A semi-conducting layer 3 having a first side and a second opposite side, a drain electrode 6, a source electrode 5, a gate electrode 4, wherein said source electrode 5, said drain electrode 6 and said gate electrode 4 are positioned on the first side of said semi-conducting layer and that said sensing layer 1 is positioned on the second side of said semi-conducting layer.

Advantageously, said sensing gate layer 1 is operatively associated with the semi-conducting layer.

According to the present invention, said semi-conducting layer has a thickness below 5000 nm and preferably below 3000 nm.

Said sensing device is able to convert a non-electrical signal into an electrical signal. A non-electrical signal can be generated by any physical or chemical event. The physical or chemical event can be, but is not limited hereto, a change of temperature, pressure, the presence of molecules or electrolytes, or radiation of energy.

Operatively associated means that any change in the sensing layer results in a change of the opto-electronic properties of the semi-conducting layer. Said sensing layer can act thereby as a second gate electrode. The dynamic influence of surface states between the sensing layer and the underlying layer can also be detected, i.e. trapping of load which has an influence not only on DC characteristics of the transistor but also on the AC characteristics, optical properties e.g. decay of photocurrent.

In a particular embodiment, said sensing layer is in direct contact with said semi-conducting layer.

In another particular embodiment, said sensing layer is not in direct contact with said semi-conducting layer. Actually an intermediate layer is placed therebetween.

Since the source electrode, the drain electrode and the gate electrode are on the second side of the semi-conducting layer, the packaging of the sensing device is facilitated.

The semi-conducting layer is chosen so as it can act as a current path between source and drain electrode. The electrical field in the channel of the device is modified by a change in the chemical or physical properties within the sensing layer, or a change of the rate of load transfer between the sensing layer and the underlying layer (dynamic influence of the surface state).

The detection principle is further based on the interaction of electron orbitals of the absorbed molecules of the functional group which has the sensing function and the semiconductor material. This interaction generates a modulation of the surface potential upon change in electronegativity of the absorbate-surface complex or modulation of surface potential by voltage on the sensing layer. This is also called the field-effect operation of the device, mostly DC oriented.

However, the device can also detect changes in the coupling between the sensing layer (or the intermediate layer) and the bulk semiconductor (e.g. decay of photocurrent or spectroscopic AC measurements).

The semi-conducting layer can be a doped/undoped semi-conducting material. Non-restrictive examples of such materials are silicon, germanium, III-V or II-VI materials or semi-conducting polymeric materials. III-V materials can be materials selected from the group consisting of Al, Ga, In, Tl, P, As, Sb, Bi or combinations thereof. II-VI materials can be materials selected from the group consisting of Zn, Cd, Hg, Se, Te, Po or combinations thereof. A combination of materials from group III-V and group II-IV is also included.

In the semi-conducting material, a conducting channel is created upon modulation by the source electrode 5 or the gate electrode 6. The semi-conducting channel layer 3 only comprises the active part of FET device.

The thickness of the semi-conducting layer is preferably below 5000 nm, preferably below 3000 nm, preferably below 1000 nm, and most preferably below 500 nm. The thickness of a MESFET is 100-500 nm depending on the doping concentration of the channel layer. However, in HEMTs, the semiconductor layer thickness is below 300 nm , below 200 nm and preferably below 100 nm. Compared to semi-conducting layer with a thickness over 5000 nm, the device as disclosed in this invention ensures the generation of the field-effect by the sensing layer, preferably by applying voltages on the gate electrode lower than 10 V. This is a main advantage compared to the prior art, where the thickness of the semi-conducting channel layer is usually over 5000 nm, which requires higher voltages on the gate electrode in order to generate a field-effect behaviour by the sensing layer.

Furthermore, high voltages can damage the organic or inorganic layers (breakdown), or can start catalysing the electrolyte solution. Thus, applying high voltages does not allow the use of the device in a liquid medium and can destroy the sensing layer.

Said sensing gate layer is chosen so as to ensure the field-effect generation and thus the current flowing in the transistor channel or to ensure the change in coupling between the sensing layer and the semi-conducting layer. Said sensing layer can be chosen so as to have a certain sensitivity towards the chemical molecules to be detected.

Said sensing layer can be a layer comprising organic molecules. Said organic molecules comprise at least a functional group which is able to be attached to the surface of the underlying layer and a functional group that serves as sensor. Attached to the surface means able to create a bond or a connection between the surface of the sensing layer and the underlying layer, this functional group is selected from the group comprising a coordinative bond, a covalent bond, chemisorption, ionic bond, partially ionic bond and the like. The other functional group that serves as a sensor should be understood as an functional group being adapted to undergo a change due to a non-electrical signal or being bound to a recognition compound being able to undergo a change due to a non-electrical signal.

The functional group being able to create a bond with the surface of the underlying layer can vary, depending on the material characteristics of the bonding surface material, e.g., thiols on metals. The functional group attached to the surface can comprise S, Si, carboxylic acids, sulfonates (SO₃-) and phosphonates (PO₃-). Lateral interactions between the spacer segments, such as, but not limited hereto, hydrocarbon segments of the molecules, comprising alkane chains and/or aromatic groups. Said terminal end-group serves as sensor. The molecules are preferably oriented perpendicular with respect to the substrate surface plane with all trans extended hydrocarbon chains oriented close to the surface normal.

Said sensing layer can have a thickness below 100 nm, preferably below 50 nm, preferably below 30 nm, preferably below 20 nm, preferably below 10 nm.

Advantageously, said sensing layer could comprise at least a self-assembling monolayer, a polymeric layer or a langmuir blodget film, but is not limited hereto.

In a preferred embodiment, said organic sensing layer is a self-assembled monolayer. Self-assembled monolayers (SAM) should be understood as a relatively ordered assembly of molecules that spontaneously adsorb (also called chemisorb) from either the vapour or liquid phase on a surface. The self-assembly is driven by preferential bond formation of an appropriately functionalized group onto specific substrate surface sites. A self-assembling molecule comprises at least a functional group attached to the bonding surface, a spacer group and a terminal group.

Said sensing layer can comprise a self-assembling monolayer or mixed self-assembling monolayers with adequate chemical functions. Non-restrictive examples of such functions are silanes, thiols, carboxylic acids, sulfonates (SO₃-) and phosphonates (PO₃-).

Furthermore, the sensing layer can comprise subsequently applied multiple layers with or without chemical reactive interlayer.

Said sensing layer should be selected such that it undergoes or induces a change (due to a non-electrical signal) in :
- the workfunction of the semi-conducting material at the junction surface or
- the workfunction of the sensing layer or
- surface potential of the semi-conducting material

Either of these changes can be induced, but do not necessarily have to be induced by changes in dipole moment (permanent or induced), introduction of charges in the sensing layer, redistribution of charges in the sensing layer or a change in the surface recombination velocity at the semiconductor surface.

The backside source and drain electrodes 5 and 6 ensure an ohmic contact to the semi-conducting layer 3. The gate electrode 4 allows biasing the current flowing between source and drain, depending on the specific application, independently of the structure of the semiconductor layer or of the type of molecules constituting the organic sensing layer, and of an individual sensor element if multiple sensors are in the same liquid: multiple ISFETs can only be biased via the liquid, which implies that all sensor elements of an array have to be simultaneously biased. The sensing layer 1 in itself (without analyte bonded) already has a strong influence on the opto-electronic properties of the semiconductor, and thereby has to be taken into account when designing a hybrid sensor.

This means that the sensitivity of the device can be determined by the voltage applied to the gate electrode 4. This is an advantage compared to prior art devices, where the sensitivity cannot be tuned by the biasing voltage but for example by adjusting the thickness of the semi-conducting layer or the doping of the semi-conducting layer since both are static.

The source electrode, the drain electrode and the gate electrode can be made of organic containing material or can be made of metals such as, but not limited to, gold, gold-germanium, aluminum or platinum. The biasing gate allows variable individual biasing of the FET to mitigate processing deficiencies or create optimum working conditions according to the type of molecules used on the sensing gate.

On III-V and II-VI semiconductor, Schottky gate contacts are usually created: an appropriately chosen metal structure in direct contact with the semiconductor creates an energy barrier which can allow the gate to bias the surface potential. In this case, there is no need for a dielectric layer. On silicon and polymers semiconductors, a high k (because of its electrical permittivity) dielectric is first deposited, in the past silicondioxide isolator was used but now even tantalumoxides or more exotic compounds are found. It will serve as the gate-oxide to ensure a good capacitive coupling of the gate electrode with the channel in the semiconductor layer.

New developments aim to create such a high-quality dielectric on top of III-V materials. In the future, such layers may be available on all semiconductor devices, independently of the type of semiconductor underneath.

Said device can further comprise an intermediate layer between the sensing layer and the semi-conducting channel layer. Said intermediate layer is preferably a crystalline material that allows a direct contact with the organic sensing layer. Cristallinity allows that the interaction of molecular orbitals with the semiconductor bulk is maximised.

Said intermediate layer can be a layer allowing a better deposition of the sensing layer. Said intermediate layer can also be a layer accounting for reducing the sensitivity of the device in order to avoid a high noise signal.

The intermediate layer can comprise a dielectric material, such as an inorganic oxide, e.g. SiO₂, or inorganic (oxy)nitride, such as Si₃N₄, or another amorphous metallic material selected from the group comprising TiO₂, Ta₂O₅, BaTiO₃, BaₓSr₁₋ₓTiO₃, Pb(ZrₓTi₁₋ₓ)O₃, SrTiO₃, BaZrO₃, PbTiO₃, LiTaO₃. The dielectric material can also comprise a polymer, such as SU-8 or BCB.

The intermediate layer can comprise a crystalline layer, comprising materials selected from the group consisting of Ga, As, N, P, In, Al and compounds thereof. An example of such a crystalline intermediate layer is low-temperature grown GaAs which presents a lower tendency to oxidise, can be made semi-insulating, thereby constituting a dielectric material, and has a high dielectric constant. If the intermediate layer is amorphous, molecular-bulk orbital mixing is reduced, thereby reducing the sensitivity of the device.

Preferably, the dielectric constant of the dielectric material should be as high as possible, preferably above 3, above 5, above 10, above 15, above 20 or above 30.

The thickness of the intermediate layer is determined by the compromise of sufficient protection and high capacitive coupling, and could be between 10 nm and 500 nm, between 10 nm and 300 nm, between 10 nm and 200 nm. Between 50 nm and 200 nm and preferably be between 50-100 nm. The intermediate layer can be deposited after flip-mounting the FET structure, as in the case of standard amorphous dielectric material, or it can be created during the production (e.g. molecular beam epitaxial growth) of the semi-conducting channel layer, as in the case of low-temperature grown GaAs for example.

Material constraints are dictated by the fact that all parts wetted during normal operation of the sensor, should withstand corrosion by the liquid medium.

For instance, biomolecules, mainly proteins, and some functional molecules limit the maximum process temperature since they tend to denature and/or loose their function when the temperature is raised too much. On the other hand, standard flip chip bonding involves temperatures as high as 350°C to reflow the solder bumps.

Patterning of organic layers can be readily done using UV-lithography techniques (masking or cleavage) but this technique must be done at wafer-level, before dicing and packaging.

If, due to the raised temperatures during standard packaging, we decide to shift surface modifications with bio or functional molecules back in the process flow, patterning has to be done at chip-level. In that case, only the less accurate micro-contact printing or dispensing techniques are viable options for patterning the organic layers.

Finally, a lot of semiconductor materials have a limited temperature budget: they can withstand a certain temperature only for a limited time before electronic properties start to degrade (e.g. because of diffusion). Hence, not only maximum temperature but also the time required for chemical synthesis can become a critical parameter.

The current invention relaxes the packaging specifications in liquid environments. The sensor envisioned in the current invention is flipped with its current/voltage carrying electrodes (source, drain and biasing gate) facing the host substrate. Since the live electrodes are on the opposite side of the semiconductor layer, away from the side that would get into contact with liquids, the current invention facilitates packaging compared to conventional sensors.

Conventional sensors, as mentioned in the background and state of the art, all have their current/voltage carrying electrodes at the front side facing the liquid. This conventional approach requires exact alignment of a sealing agent to shield these electrodes and at the same time leave the sensing area exposed. Defects in the sealing agents of conventional devices are prone to a higher chance of having detrimental results. The current invention mitigates these problems by putting its live electrodes at the backside.

### Description of preferred embodiments of the invention

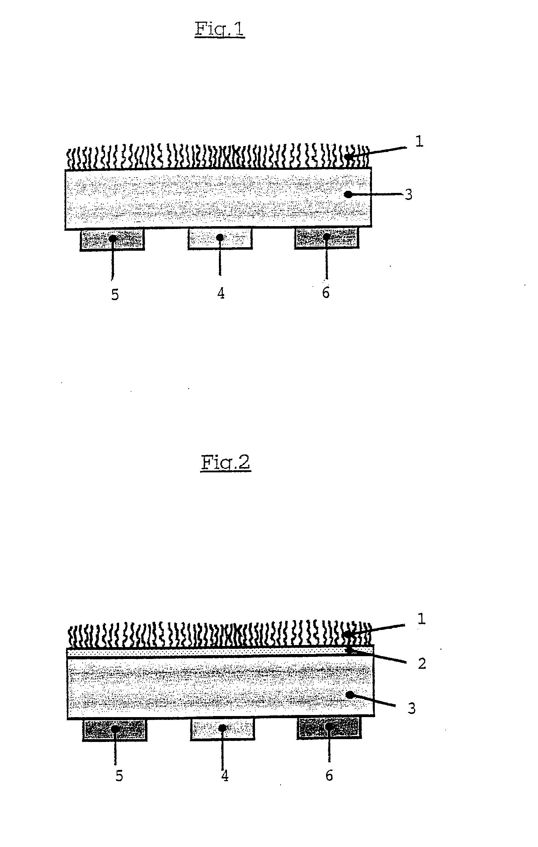

In a first embodiment, a sensing device is disclosed as illustrated in figure 1. The signal created by the presence of an analyte on the sensing layer is transmitted to the semi-conducting channel layer 3 without any cushioning effect.

The second embodiment of the present invention is illustrated in figure 2, where an intermediate layer 2 is present between the sensing layer 1 and the semi-conducting channel layer 3.

In reference to figure 1, a preferred embodiment of the present invention comprises a semi-conducting channel layer 3. This layer provides current flow susceptible to a field effect or has opto-electronic characteristics that can be modulated by molecular adsorption. Depending on the type of field effect transistor that will be used as the micro-electronic transducer, the structure of the semi-conducting channel layer 3 will differ.

If the transducer is a MESFET type, the semiconductor layer 3 comprises a highly n⁺-doped GaAs layer on top of a lower n-doped GaAs layer, both doped with for example Si. The top layer has a doping concentration of a few times 10¹⁸ cm⁻³, while the lower doped layer has a doping between a few times 10¹⁶ cm⁻³ up to a few times 10¹⁷ cm⁻³, preferably about 10¹⁷ cm⁻³. For a doping concentration of 10¹⁷ cm⁻³, the lower doped layer is about 200 to 300 nm thick.

The source 5 and drain 6 contacts provide an ohmic contact to the semi-conducting channel layer 3 through the proper metal stacks, such as Au/Ni/Au₈₈Ge₁₂:n⁺-GaAs. A Schottky gate contact 4 is created by an appropriate metal stack, such as Au/Pt/Ti:n-GaAs, that ensures a high potential barrier between the metal and the semi-conducting channel layer

The organic sensing layer 1 should provide at least some but not necessarily all of the following functions:
a) an intimate and stable binding to the surface of the semi-conducting channel layer 3 or to the intermediate layer 2 to assure long-term stability and optimal molecular-surface state orbital mixing,
b) adequate passivation and protection of the surface,
c) a tailored influence on the electro-optical properties of the semi-conducting channel layer underneath,
d) an immobilised molecular sensing function, and
e) molecular function to prevent non-specific adsorption to reduce noise from adsorbing non-targeted analytes.

The multifunctional organic sensing layer 1 comprises a surface anchoring functional group that preferably binds the organic sensing layer covalently/coordinatively to the semi-conducting channel layer 3 from the side opposite the said source 5, drain 6 and gate 4 electrodes. The surface anchoring functional group can be chosen to be e.g. a thiol, a disulfide, a carboxylic acid, a sulfonate or a phosphonate.

Furthermore the organic sensing layer comprises an immobilised molecular sensor function, sensitive to light or electrical fields for example, such as, but not limited to, 4-[4-N,N-bis(hydroxylethyl)aminophenylazo] pyridinium, sensitive to biomolecules/proteins for example, such as single DNA strands or antibodies, or sensitive to ions or chemical agents for example.

Every single analyte requires a different selectively.

The intermediate layer 2 can have many functions. It can be introduced to cushion the signal, i.e. to reduce the sensitivity of the device. The intermediate layer 2 might be needed to protect the semi-conducting channel layer 3 from degradation, e.g. in wet operating conditions due to electrochemical reactions or for example the oxidation of organic semi-conducting polymers. Alternatively, the intermediate layer 2 may help to create a surface more susceptible to an appropriate type of surface chemistry treatment. Depending on its intended function, the characteristics and materials of the intermediate layer can be adapted.

The sensor operation is statically biased during production by the semiconductor layer 3 characteristics, such as the layer structure, the doping concentration and the thickness, and by the overall influence of the organic sensing layer. In the latter regard, the choice of a specific binding group or the inclusion of functional groups to tune the opto-electronic characteristics of the semiconductor channel underneath play an important role. During operation the sensor can be biased by the gate electrode 4.

Furthermore, an array of sensors is disclosed. Said array comprises at least 2 sensors. Said sensors are the sensors disclosed in this application.

The production of the sensor according to the present invention can be described in several steps:
- In a first step, a micro-electronic field-effect transistor (FET) is created on a sacrificial substrate by using processing steps known in integrated circuit manufacturing.
- In a second step, a single FET is obtained by dicing the wafer. This single FET is flipped and mounted upside down on a host-substrate, using a glue layer, such as BCB.
   This procedure can be executed on bars or even an entire wafer of FETs.
- In a third step, the primary substrate is thinned down by using techniques such as chemical mechanical polishing, dry and wet etching. When desired, the sacrificial substrate can be completely removed using wet and/or dry etching techniques, leaving only the semi-conducting channel layer 3 with or without an intermediate layer 2.
- In a fourth step, the active area of the FET is protected for example by a photolithographically definable polymer, and the source 5, drain 6 and gate 4 electrodes are partially exposed using wet or dry etching techniques. Subsequently, electrical connections are created on the host-substrate, contacting the FET electrodes.
- Subsequent processing involves, but not necessarily in this order, dicing of the host-substrate, packaging of the die and application and possibly patterning of the organic sensing layer. The exact scheduling of these process steps depends on the nature of the organic sensing layer and the materials used for packaging and for the production of the transducer. A possible process flow would be to attach at the wafer-level of the host-substrate a first patterned organic layer, a so-called anchoring layer, on the second side of the transducers. The host-substrate is then diced, singulating sensor chips, which are then packaged. Finally, the remainder of the organic sensing layer is applied.
- For the application of an organic sensing layer, many strategies are possible, but mainly two of them are applied. In a first approach, a multifunctional molecule comprising all desired functions is grafted to a reactive surface in a one-step reaction. A second method involves the synthesis of the required organic architecture by in-situ chemistry on the surface: new layers are consecutively grafted from the previously attached layer. A compromise has to be made between a minimal number of reaction steps (to ensure a high overall reaction yield) and a well-controlled coverage of the anchoring layer (i.e. the first layer, which has a strong effect on the electronic passivation of the surface). Preferably, a two-step approach is used.

Disclosed hereafter is a preferred embodiment to create an organic sensing layer. From liquid or vapour phase, a self-assembled monolayer (SAM) or self-assembled mixed monolayer is formed on the surface of the semi-conducting channel layer 3 or of the intermediate layer 2. This first layer comprises anchoring molecules with basically three functions: a binding group, a spacer and a functional endgroup. Covalently binding molecules are preferred to ensure long-term stability. The spacer properties strongly affect the kinetics of the self-assembly process and the interlayer stacking of the resulting SAM. The functional endgroup can tune hydrophobicity of the SAM to control non-specific adsorption or can provide a reactive group so that the anchoring SAM constitutes a precursor for the subsequent organic layer. Mixed SAMs of anchoring molecules with different functional endgroups and/or spacers can be used to tailor the surface characteristics to various needs (e.g. prevent non-specific adsorption while still providing sufficient immobilisation sites for the subsequent layer).

A second monolayer can be grafted from the anchoring SAM by in-situ chemistry or physisorption from liquid or vapour (e.g. molecular layer epitaxy) phase. Next to a lower binding and an upper reactive linker group, the reagent may comprise auxiliary functional groups that allow control over molecular dipole moments and/or frontier orbital energy levels. Hence, this second layer simultaneously can offer immobilisation sites for the subsequent layers (e.g. molecular sensing function) and can fine-tune the opto-electronic properties of the semi-conducting channel layer 3 underneath.

Patterned application of the organic sensing layer 1 can be achieved by means of e.g. lithographic masking techniques, deep UV photo-cleavage, micro-contact printing, dispensing techniques, ... .

The sensor as disclosed can be used to detect, measure and monitor the physicochemical properties of a sample. A sample can be a solid, a solution, a gas, a vapour or a mixture of these. The physicochemical properties are determined by the presence in the sample of an analyte.

An analyte can for example be an electrolyte, a biomolecule, a neutral molecule, a change in pressure, and a change in temperature and radiation.

Depending on the measurement method, the sensor as described can be used with a reference electrode or a reference sensor, or a combination of both. The sensor can be used with a reference sensor for example as part of a differential amplifier circuit in which one of the inputs is a reference sensor, and the sensor constitutes the other input. In a liquid environment, the sensor can be used with or without reference electrode.

Several measurement methods can be thought of, therefore the following enumeration is non-exhaustive. Due to its specific nature, the sensor as disclosed can be biased via the gate electrode 4 or via biasing the sample (e.g. by the use of a reference electrode in an aqueous environment) in contact with the organic sensing layer 1 to modulate the current between source 5 and drain 6 electrode, or to modulate the opto-electronic properties of the semi-conducting channel layer 3.

The sensor is preferably biased via the gate electrode 4. In the fixed gate voltage mode, the gate electrode 4 or the sample is kept at a fixed voltage with respect to the sensor source electrode 5, and the current flowing between source 5 and drain electrodes 6 is recorded in function of the changes in the sample. A possible application of the measurement method is to monitor the effect of a change in the physicochemical nature of the sensing layer on the opto-electronic properties of the semi-conducting channel layer on a time-resolved scale. For instance, the decay of the photocurrent between source and drain after pulsed illumination of a light sensitive sensing layer can be measured while the source drain voltage is kept constant.

In constant drain current mode, the current between source and drain is kept constant by adjusting the voltage drop between the gate electrode 4 or the sample and the source. The response of the sensor is the variation of the voltage drop in function of changes in the sample.

The bias applied to the gate electrode 4 can be also a known AC modulated voltage. If this AC modulated voltage has a constant frequency, the sensor as disclosed can be used as a mixing element in which the signal from the sensing layer 1 will be mixed with the known AC modulated bias. For instance, this measurement method might prove useful to reduce noise or to look the mixing of radiation with the known AC modulated bias. If the frequency of the AC modulated bias is made variable, the device can be used to make spectroscopic measurements of the changes in the opto-electronic properties of the semi-conducting channel layer in function of changes in the sample, interacting with the device via the sensing layer.

## Claims

1. A sensing device comprising :
- a drain electrode (6), a source electrode (5), a gate electrode (4), a semi-conducting channel layer (3) having a first side and a second opposite side,
- an organic sensing layer (1) having at least one functional group which is able to bind the underlying layer to said organic sensing layer (1) and at least another functional group which has a sensing function;
wherein
- said source electrode (5), said drain electrode (6) and said gate electrode (4) are placed on the first side of said semi-conducting channel layer (3), while said organic sensing layer is placed on the second side of the semi-conducting channel layer,
- said semi-conducting channel layer (3) is operatively associated with said organic sensing layer, and
- said semi-conducting channel layer (3) has a thickness below 5000 nm.

2. A device as in claim 1 wherein it further comprises an intermediate layer (2) between the sensing layer (1) and the semi-conducting channel layer (3).

3. A device as in claim 1 or 2 wherein the intermediate layer (2) between the sensing layer (1) and the semi-conducting channel layer (3) has a thickness between 10 and 500 nm.

4. A device as in claim 2 or 3 wherein the intermediate layer (2) between the organic sensing layer (1) and the semi-conducting channel layer (3) has a thickness between 50 and 200 nm.

5. A device as in any of the previous claims wherein said intermediate layer (2) is a crystalline layer.

6. A device as in any of the previous claims wherein said organic sensing layer (1) comprises a self-assembling monolayer.

7. A device as in any of the previous claims wherein the material of the intermediate layer (2) is selected from the group consisting of Ga, As, N, P, In, Al or compounds thereof.

8. A device as in any of the previous claims wherein said organic sensing layer (1) is able to induce a change in its physical or chemical properties due to a non-electrical signal in the workfunction and/or the surface potential of the underlying layer of said sensing layer.

9. A device as in claim 8 wherein said organic sensing layer (1) induces a change in the dipole moment and/or in the surface recombination velocity of the semi-conducting channel layer (3) by the introduction and/or the redistribution of charges in said organic sensing layer (1).

10. A device as in any of the previous claims wherein the material of the semi-conducting channel layer (3) comprises a material selected from the group consisting of Silicon, Germanium, Gallium, Arsenic, Indium, Aluminium, Phosphor or compounds thereof.

11. A device as in any of the previous claims wherein said organic sensing layer (1) has a thickness below 100 nm.

12. A method for the production of a sensing device as claimed in any one of the previous claims, said device comprising :
- an organic sensing layer (1),
- a semi-conducting channel layer (3),
- a drain electrode (6),
- a source electrode (5),
- a gate electrode (4),
wherein said source electrode (5), said drain electrode (6) and said gate electrode (4) are built on the first side of said semi-conducting channel layer while said organic sensing layer is built on the opposite side of said semi-conducting channel layer (3).

13. Method as in claim 12 wherein the organic sensing layer (1) is made by a self-assembling monolayer or a mixed self-assembling monolayer with functionalized molecules.

14. Method as in claim 12 wherein an additional intermediate layer (2) is introduced between the organic sensing layer (1) and the semi-conducting channel layer (3).

15. Method as in any of the previous claims 12 to 14 wherein the semi-conducting channel layer (3) is realised in a thickness between 10 and 5000 nm.

16. Use of a device as in any of the previous claims 1 to 10 for the detection of molecules.

17. Use of a device as in any of the previous claims 1 to 10 for the detection of energy.
